(19)

Europäisches
Patentamt
European
Patent Office
Office européen
des brevets

(11)     **EP 4 730 014 A1**

(12)     **EUROPEAN PATENT APPLICATION**
published in accordance with Art. 153(4) EPC

(43) Date of publication:
**22.04.2026   Bulletin 2026/17**

(21) Application number: 24842090.3

(22) Date of filing: **06.06.2024**

(51) International Patent Classification (IPC):
*G02B 27/01* (2006.01)     *G02B 17/08* (2006.01)

(86) International application number:
**PCT/CN2024/097831**

(87) International publication number:
**WO 2025/016090 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **14.07.2023   CN 202310867779**

(71) Applicant: **Hangzhou Lingban Technology Co.,
Ltd.
Hangzhou, Zhejiang 310000 (CN)**

(72) Inventors:
• XIA, Jie
  **Hangzhou, Zhejiang 310000 (CN)**
• CHEN, Pengbo
  **Hangzhou, Zhejiang 310000 (CN)**
• DU, Hui
  **Hangzhou, Zhejiang 310000 (CN)**
• JIANG, Chaoqun
  **Hangzhou, Zhejiang 310000 (CN)**

(74) Representative: **Huang, Liwei
Cäcilienstraße 12
40597 Düsseldorf (DE)**

(54)    **LARGE FIELD-OF-VIEW LIGHTWEIGHT HEAD-MOUNTED DISPLAY DEVICE**

(57)     A lightweight head-mounted display apparatus with a large field of view includes: a display image source (1), provided with a linear polarization film on a light-emitting side; a first imaging prism unit (2), including a film unit and a first prism, where the film unit includes a polarization reflection unit and is attached to a side, away from a first imaging lens unit (4), of the first prism; a second imaging prism unit (3), including a second prism and being disposed near the film unit; the first imaging lens unit (4), attached with a transflective film on a side away from the first imaging prism unit (2); and a polarization conversion unit, located between the first imaging prism unit (2) and the first imaging lens unit (4), or located between the polarization reflection unit and the second imaging prism unit (3). Thicknesses of the linear polarization film, the film unit, the polarization conversion unit, and the transflective film are properly set. The head-mounted display apparatus achieves lightening and thinning while increasing a field of view, thereby ensuring imaging quality and providing a diopter adjustment function.

FIG. 1

**Description**

**CROSS-REFERENCE TO RELATED APPLICATIONS**

This application claims priority to Chinese Patent Application No. 2023 10867779.6, filed with the China National Intellectual Property Administration on July 14, 2023, which is incorporated herein by reference in its entirety.

**TECHNICAL FIELD**

This application pertains to the field of near-eye display technologies, and specifically relates to a lightweight head-mounted display apparatus with a large field of view.

**BACKGROUND**

As AR products are more and more widely used in augmented reality and corresponding technologies are being constantly developed, AR products are increasingly valued by people, and are next-generation mobile terminals that are expected to take the place of mobile phones. In recent years, an Augmented Reality (AR) technology has been applied and rapidly developed in intelligent wearable devices. A core component of the Augmented Reality technology is an optical module. A field of view (FOV), a thickness, and a display effect of the optical module directly determine quality of the intelligent wearable devices. In particular, still providing excellent image quality while achieving a large FOV and lightening and thinning has become a key to the development of the AR technology.

Among current AR solutions, a mass production solution that can present relatively good image quality is a Birdbath solution, which has a thickness of 18 mm to 20 mm. The thickness of the Birdbath solution cannot meet a daily wearing requirement of people. Moreover, an optical waveguide solution featuring lightening and thinning is not mature enough to provide a relatively good imaging effect and a relatively large FOV. To achieve a large FOV, a structural size has to be increased. A large FOV and a small size cannot be both achieved. In addition, relatively serious problems of color cast and luminous efficacy occur. Therefore, it is urgent to provide a solution that achieves lightening and thinning of an intelligent wearable device and that achieves a relatively good imaging effect.

**SUMMARY**

An objective of this application is to provide a lightweight head-mounted display apparatus with a large field of view to resolve the foregoing problems, so as to achieve lightening and thinning while increasing a field of view, thereby ensuring imaging quality and providing a diopter adjustment function.

To achieve the foregoing objective, this application uses the following technical solutions:

A lightweight head-mounted display apparatus with a large field of view provided in this application includes a display image source, a first imaging prism unit, a second imaging prism unit, a first imaging lens unit, and a polarization conversion unit.

The display image source is provided with a linear polarization film on a light-emitting side.

The first imaging prism unit includes a film unit and a first prism, and the film unit includes a polarization reflection unit and is attached to a side, away from the first imaging lens unit, of the first prism.

The second imaging prism unit includes a second prism and is disposed near the film unit.

The first imaging lens unit is attached with a transflective film on a side away from the first imaging prism unit.

The polarization conversion unit is located between the first imaging prism unit and the first imaging lens unit, or is located between the polarization reflection unit and the first imaging prism unit.

A thickness of the linear polarization film is 60 nm to 250 nm, a thickness of the film unit is 90 nm to 280 nm, a thickness of the polarization conversion unit is 30 nm to 100 nm, and a thickness of the transflective film is 50 nm to 300 nm.

Imaging light emitted by the display image source is converted by the linear polarization film into linear polarization light, and the linear polarization light enters the first imaging prism unit and undergoes total reflection, and then arrives at the film unit, and is reflected by the film unit to the first imaging lens unit, and then is reflected back to the first imaging prism unit by the first imaging lens unit, and is sequentially transmitted through the film unit and the second imaging prism unit to arrive at a human eye for imaging.

Preferably, the polarization conversion unit is a quarter-wave plate, and an included angle between a reflection axis of the film unit and a slow axis of the polarization conversion unit is 45°±1°.

Preferably, each of the prisms is a triangular prism, and the polarization reflection unit is a polarization reflection film.

Preferably, the film unit further includes a polarization absorption unit, the polarization absorption unit is a polarization absorption film and is located between the polarization reflection unit and the second imaging prism unit, and an absorption axis of the polarization absorption unit is parallel to a reflection axis of the polarization reflection unit.

Preferably, the display image source moves relative to the first imaging prism unit, and a moving distance is less than 5 mm.

Preferably, an included angle between a direction in which the display image source moves relative to the first imaging prism unit and an optical axis direction of the display image source is 0° to 15°.

Preferably, the lightweight head-mounted display apparatus with a large field of view further includes a second imaging lens unit, the second imaging lens unit is located on the light-emitting side of the display image source, and the linear polarization light enters the first imaging prism unit through the second imaging lens unit.

Preferably, a focal length of the second imaging 1 ens unit is 5 mm to 50 mm.

Preferably, the display image source and the second imaging lens unit move synchronously relative to the first imaging prism unit, and a moving distance is less than 4 mm.

Preferably, an included angle between a direction in which the display image source and the second imaging lens unit move synchronously relative to the first imaging prism unit and an optical axis direction of the display image source is 0° to 10°.

Preferably, a polarizer is further disposed on a side, near the human eye, of the second imaging prism unit, and a thickness of the polarizer is 60 nm to 250 nm.

Preferably, each of the imaging lens units includes at least one lens.

Preferably, a mirror surface type of each of the lenses is a free combination of a spherical surface, an aspherical surface, a free-form surface, a Fresnel surface, and a plane.

Preferably, the first imaging lens unit is a curved lens.

Preferably, the aspherical surface meets the following formula:

$$z = \frac{CY^2}{1 + \sqrt{1 - (1+k)C^2Y^2}} + \sum_{i=2}^{N} a_i Y^{2i}$$

in the formula, z is a rise, $Y$ is a lens center height, $k$ is a conic coefficient, C is a curvature, $a_i$ is an ith aspherical coefficient, and $N$ is a positive integer.

Preferably, the display image source is one selected from an organic light-emitting diode display, a liquid crystal on silicon display, a micro light-emitting diode display, a digital light processing display, and a laser beam scanning display.

Compared with a conventional technology, this application brings the following beneficial effects:

The lightweight head-mounted display apparatus with a large field of view uses an optical path folding (Pancake) solution, in which a foldable optical element that includes a first imaging prism unit, a second imaging prism unit, and a first imaging lens unit is used to increase a quantity of times of inter-mirror reflection based on refraction, reflection, and polarization principles of light, to implement a plurality of times of optical path folding, so as to have a shorter optical path. This can achieve lightening and thinning while increasing a field of view FOV, ensure imaging quality, and provide a diopter adjustment function. For example, the FOV increases from 48° in a conventional Birdbath solution to 60° or above, and a thickness is reduced by half on the basis of 18 mm to 20 mm in the conventional Birdbath solution.

**BRIEF DE SCRIPTION OF DRAWINGS**

FIG. 1 is a schematic structural diagram of a lightweight head-mounted display apparatus with a large field of view according to Embodiment 1 of this application;

FIG. 2 is a schematic diagram of diopter adjustment of a lightweight head-mounted display apparatus with a large field of view according to Embodiment 1 of this application;

FIG. 3 is a graph of an MTF curve at a diopter 0D according to Embodiment 1 of this application;

FIG. 4 is a graph of an MTF curve at a diopter 6D according to Embodiment 1 of this application;

FIG. 5 is a graph of an MTF curve at a diopter 0D according to Embodiment 2 of this application;

FIG. 6 is a graph of an MTF curve at a diopter 6D according to Embodiment 2 of this application;

FIG. 7 is a graph of an MTF curve at a diopter 0D according to Embodiment 3 of this application;

FIG. 8 is a graph of an MTF curve at a diopter 6D according to Embodiment 3 of this application;

FIG. 9 is a graph of an MTF curve at a diopter 0D according to Embodiment 4 of this application;

FIG. 10 is a graph of an MTF curve at a diopter 6D according to Embodiment 4 of this application;

FIG. 11 is a graph of an MTF curve at a diopter 0D according to Embodiment 5 of this application; and

FIG. 12 is a graph of an MTF curve at a diopter 6D according to Embodiment 5 of this application.

Description of reference numerals: 1. display image source; 2. first imaging prism unit; 3. second imaging prism unit; 4. first imaging lens unit; 5. second imaging lens unit; 6. human eye.

## DESCRIPTION OF EMBODIMENTS

Technical solutions in embodiments of this application are clearly and comprehensively described below with reference to the accompanying drawings in the embodiments of this application. Clearly, the described embodiments are merely some rather than all of the embodiments of this application. Based on the embodiments of this application, all other embodiments obtained by a person of ordinary skill in the art without creative efforts fall within the protection scope of this application.

It should be noted that, unless otherwise defined, all technical and scientific terms used in this specification have same meanings as those usually understood by a person skilled in the art of this application. Terms used in this specification of this application are merely intended to describe some specific embodiments, but not to limit this application.

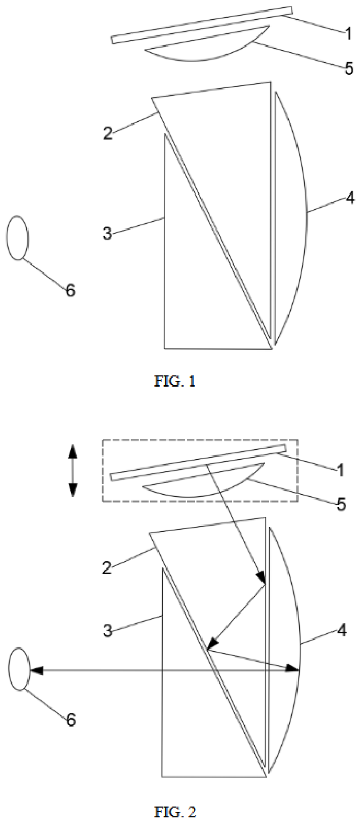

As shown in FIG. 1 and FIG. 2, a lightweight head-mounted display apparatus with a large field of view includes a display image source 1, a first imaging prism unit 2, a second imaging prism unit 3, a first imaging lens unit 4, and a polarization conversion unit.

The display image source 1 is provided with a linear polarization film on a light-emitting side.

The first imaging prism unit 2 includes a film unit and a first prism, and the film unit includes a polarization reflection unit and is attached to a side, away from the first imaging lens unit 4, of the first prism.

The second imaging prism unit 3 includes a second prism and is disposed near the film unit.

The first imaging lens unit 4 is attached with a transflective film on a side away from the first imaging prism unit 2.

The polarization conversion unit is located between the first imaging prism unit 2 and the first imaging lens unit 4, or is located between the polarization reflection unit and the first imaging prism unit 2.

A thickness of the linear polarization film is 60 nm to 250 nm, a thickness of the film unit is 90 nm to 280 nm, a thickness of the polarization conversion unit is 30 nm to 100 nm, and a thickness of the transflective film is 50 nm to 300 nm.

Imaging light emitted by the display image source 1 is converted by the linear polarization film into linear polarization light, and the linear polarization light enters the first imaging prism unit 2 and undergoes total reflection, and then arrives at the film unit, and is reflected by the film unit to the first imaging lens unit 4, and then is reflected back to the first imaging prism unit 2 by the first imaging lens unit 4, and is sequentially transmitted through the film unit and the second imaging prism unit 3 to arrive at a human eye 6 for imaging.

The display image source 1 is configured to provide an image picture. The first imaging prism unit 2 includes a first prism and a film unit that has a light modulation function. The first prism may be made of a plastic material or a glass material. The film unit may be attached to the first prism or plated on the first prism. The film unit implements functions of light polarization and reflection. The second imaging prism unit 3 includes a second prism and is disposed near the film unit. For example, the second imaging prism unit 3 is located between the first imaging prism unit 2 and the human eye 6. The polarization conversion unit may be located between the first imaging prism unit 2 and the first imaging lens unit 4, or may be located between the polarization reflection unit and the first imaging prism unit 2, and may be disposed according to an actual requirement.

The first imaging lens unit 4 is a lens group that has functions of aberration correction and optical path reflection. The lens group may be made of a glass material or a plastic material, and includes but is not limited to the following types: a spherical lens, an aspherical lens, a free-form lens, a Fresnel lens, a flat lens, and the like. The spherical lens is preferred. For example, the first imaging lens unit 4 is a curved lens, and a transflective film is disposed on an inner side (a side away from the first imaging prism unit 2) of the curved lens. The transflective film may be implemented in a film plating manner or a film attachment manner.

In addition, thicknesses of the linear polarization film, the film unit, the polarization conversion unit, and the transflective film are properly set, so that transmissive and reflective effects can be ensured, and feasibility of a film material process can be ensured, thereby well balancing imaging quality and reliability. Details are as follows:

1) An excessively thin linear polarization film may encounter problems such as unstable optical performance, a poor polarization effect, and a formation failure. In addition, the excessively thin linear polarization film is easily affected by an external environment, such as mechanical damage or chemical corrosion, thereby reducing durability of the excessively thin linear polarization film. However, an excessively thick linear polarization film increases reflectivity, increases a loss of light, and also affects a polarization effect of the excessively thick linear polarization film. As a result, optical performance of the excessively thick linear polarization film deteriorates, and there is a risk of a ghost image.

2) The polarization reflection unit of the film unit is a thin film material that reflects light by using a polarization characteristic. If the material of the polarization reflection unit is excessively thin, the following problems are caused: 1.

It is difficult to form the polarization reflection unit, and the polarization reflection unit is more fragile and easy to deform, thereby affecting the polarization effect. 2. The durability decreases: An excessively thin material of the polarization reflection unit is more prone to damage because the material is relatively fragile and is prone to wear or scratch. If the material of the polarization reflection unit is excessively thick, optical performance deteriorates: Transmittance and a polarization rate decrease, thereby affecting an application effect of the polarization reflection unit in an optical component, and easily forming a ghost image.

3) The polarization conversion unit (such as a quarter-wave plate) is an optical component, configured to adjust a polarization state of light and change a phase of light. An excessively thin polarization conversion unit cannot be formed and is easily cracked. However, an excessively thick polarization conversion unit causes an optical path difference to change. The thickness of the polarization conversion unit is designed based on a wavelength. If the polarization conversion unit is excessively thick, a change of the optical path difference exceeds a design value, thereby affecting a capability of the polarization conversion unit to adjust a polarization state and a phase of light.

4) When the transflective film employs an evaporation manner, an excessively thin transflective film cannot be formed through evaporation and cannot ensure thickness uniformity. However, an excessively thick transflective film poses a risk of film layer detachment. An excessively thin or excessively thick transflective film hardly ensures an imaging effect and stability.

The head-mounted display apparatus performs reflection for three times, and performs optical path folding for a plurality of times, so as to increase a field of view FOV and achieve lightening and thinning. Specifically, the first-time reflection is total reflection by using air (that is, there is an air gap between the first imaging prism unit 2 and the first imaging lens unit 4, and a refractive index of the air is lower than that of the first imaging prism unit 2 and the first imaging lens unit 4. Therefore, imaging light can be totally reflected on a wall surface, near the first imaging lens unit 4, of the first imaging prism unit 2). The second-time reflection is reflection performed when linear polarization light converted by the linear polarization film arrives at the film unit. The third-time reflection is reflection performed by using the transflective film. For example, the FOV increases from 48° in a conventional Birdbath solution to 60° or above, and a thickness is reduced by half on the basis of 18 mm to 20 mm in the conventional Birdbath solution.

In an embodiment, the polarization conversion unit is a quarter-wave plate, and an included angle between a reflection axis of the film unit and a slow axis of the polarization conversion unit is 45°±1°. To ensure an imaging effect, there is a specific angle relationship between the film unit and the polarization conversion unit. The slow axis of the polarization conversion unit needs to be attached to the reflection axis of the film unit at an angle of 45°, with a tolerance of ±1°. This can ensure that the linear polarization light is changed to standard circular polarization light.

In an embodiment, each of the prisms is a triangular prism, and the polarization reflection unit is a polarization reflection film.

In an embodiment, the film unit further includes a polarization absorption unit, the polarization absorption unit is a polarization absorption film and is located between the polarization reflection unit and the second imaging prism unit 3, and an absorption axis of the polarization absorption unit is parallel to a reflection axis of the polarization reflection unit. The reflection axis of the polarization reflection unit (for example, a polarization reflection film) and the absorption axis of the polarization absorption unit (for example, a polarization absorption film) need to be parallel to each other, thereby helping eliminate ghosting. To be specific, the polarization conversion unit, the polarization reflection unit, and the polarization absorption unit are sequentially disposed in a direction near the human eye 6.

In an embodiment, the display image source 1 further moves relative to the first imaging prism unit 2, and a moving distance is less than 5 mm. Diopter adjustment from 0D to 6D can be implemented.

In an embodiment, an included angle between a direction in which the display image source 1 moves relative to the first imaging prism unit 2 and an optical axis direction of the display image source 1 is 0° to 15°. The optical axis direction of the display image source 1 is a direction perpendicular to a screen light-emitting surface of the display image source 1.

In actual use, for convenience of machining, forming, assembling, and the like, the included angle may be preferably 0°. In this case, however, if the display image source 1 is excessively large, when the display image source 1 moves to a range endpoint, because of a limitation of an optical lens or the like, displayed content at a light-emitting surface edge of the display image source 1 may be unable to normally enter the first imaging prism unit 2 for light transmission, and consequently, a picture finally entering an eye is missing or displaced or distorted seriously.

Therefore, to achieve integrity and excellent imaging quality of a final picture, it is possible to make a moving direction of the display image source 1 form a specific included angle with the optical axis direction. To be specific, during moving, there is a moving component that is parallel to the light-emitting surface of the display image source 1, so as to ensure that imaging light emitted by the display image source 1 in an entire moving range can normally enter the first imaging prism unit 2 for light transmission, and ensure that a final imaging picture is complete within a diopter adjustment range and the entire light-emitting surface of the display image source 1 can be fully used.

However, the angle should not be excessively large, so as to ensure that when the display image source 1 moves, a moving component parallel to the light-emitting surface of the display image source 1 is relatively small, and a main moving component of the display image source 1 is in the optical axis direction. If the angle is excessively large, that is, when the display image source 1 moves, the moving component parallel to the light-emitting surface of the display image source 1 is excessively large, to ensure that all imaging light emitted by the display image source 1 can enter an incident surface of the first imaging prism unit 2 in the entire diopter adjustment range, the incident surface of the first imaging prism unit 2 needs to be quite large, and a volume of an entire apparatus is also quite large. Consequently, a volume of an Augmented Reality device used is also relatively large, making it difficult to meet a requirement for lightening and thinning. Moreover, an excessively large angle also causes a picture to be missing, displaced, or distorted seriously. Specifically, in comprehensive consideration of lightening and thinning, imaging quality, picture integrity, and the like, the included angle is preferably 7°, which can ensure integrity of a displayed picture and ensure a display effect while ensuring lightening and thinning.

In an embodiment, the lightweight head-mounted display apparatus with a large field of view further includes a second imaging lens unit 5, the second imaging lens unit 5 is located on the light-emitting side of the display image source 1, and the linear polarization light enters the first imaging prism unit 2 through the second imaging lens unit 5.

In an embodiment, a focal length of the second imaging lens unit 5 is 5 mm to 50 mm. This helps improve imaging quality.

In an embodiment, the display image source 1 and the second imaging lens unit 5 further move synchronously relative to the first imaging prism unit 2, and a moving distance is less than 4 mm. Diopter adjustment from 0D to 6D can be implemented.

In an embodiment, an included angle between a direction in which the display image source 1 and the second imaging lens unit 5 move synchronously relative to the first imaging prism unit 2 and an optical axis direction of the display image source 1 is 0° to 10°. The optical axis direction of the display image source 1 is a direction perpendicular to a screen light-emitting surface of the display image source 1.

In actual use, for convenience of machining, forming, assembling, and the like, the included angle may be preferably 0°. In this case, however, if the display image source is excessively large, when the display image source 1 and the second imaging lens unit 5 move synchronously to a range endpoint, because of a limitation of an optical lens or the like, displayed content at a light-emitting surface edge of the display image source 1 may be unable to normally enter the first imaging prism unit 2 for light transmission, and consequently, a picture finally entering an eye is missing or displaced or distorted seriously.

Therefore, to achieve integrity and excellent imaging quality of a final picture, it is possible to make a direction in which the display image source 1 and the second imaging lens unit 5 move synchronously form a specific included angle with the optical axis direction of the display image source 1. To be specific, during moving, there is a moving component that is parallel to the light-emitting surface of the display image source 1, so as to ensure that imaging light emitted by the display image source 1 in an entire moving range can normally enter the first imaging prism unit 2 for light transmission, and ensure that a final imaging picture is complete within a diopter adjustment range and the entire light-emitting surface of the display image source 1 can be fully used.

However, the angle should not be excessively large, so as to ensure that when the display image source 1 moves, a moving component parallel to the light-emitting surface of the display image source 1 is relatively small, and a main moving component of the display image source 1 is in the optical axis direction. If the angle is excessively large, that is, when the display image source 1 moves, the moving component parallel to the light-emitting surface of the display image source 1 is excessively large, to ensure that all imaging light emitted by the display image source 1 can enter an incident surface of the first imaging prism unit 2 in the entire diopter adjustment range, the incident surface of the first imaging prism unit 2 needs to be quite large, and a volume of an entire apparatus is also quite large. Consequently, a volume of an Augmented Reality device used is also relatively large, making it difficult to meet a requirement for lightening and thinning. Moreover, an excessively large included angle also causes a picture to be missing, displaced, or distorted seriously.

Compared with the foregoing solution in which only the display image source 1 is moved, because the second imaging lens unit 5 with a positive focal length is added, and imaging light is constrained and converged before entering the first imaging prism unit 2, an included angle and an amount of movement that are required are both less than those in the solution in which only the display image source 1 is moved. In addition, the display image source 1 and the second imaging lens unit 5 move synchronously. This moving manner can ensure that during the moving, an angle formed after light emitted from a same position of the display image source 1 is transmitted through the second imaging lens unit 5 is consistent. To be specific, in the case of different diopters, a degree of divergence of light emitted by the second imaging lens unit 5 is consistent, which can ensure that a final imaging FOV is consistent and is not greatly reduced.

In an embodiment, a polarizer is further disposed on a side, near the human eye, of the second imaging prism unit 3, and a thickness of the polarizer is 60 nm to 250 nm.

When there is no second imaging lens unit 5, design compatibility is quite high, which facilitates mass production. If the second imaging lens unit 5 is disposed, imaging quality may be further improved. The second imaging lens unit may be in a form of a lens group. To reduce rainbow patterns generated by the second imaging lens unit 5, a polarization absorbing film may be attached to a near-eye surface of the second imaging prism unit 3, which may also reduce rainbow patterns. A principle thereof is that linear polarization light in an imaging direction is used to weaken stray light by half without affecting imaging, because the stray light has directions of parallel imaging linear polarization light and vertical linear polarization light.

For example, a polarizer may be attached to a near-eye surface of the second imaging prism unit 3 , and a thickness of the polarizer is 60 nm to 250 nm. If the thickness is excessively small, a thin film cannot be formed through stacking and cannot ensure an effect. If the thickness is excessively large, light is reflected inside the film, causing a ghost image. Therefore, 60 nm to 250 nm can ensure an effect and does not cause other negative effects, thereby eliminating external stray light.

In an embodiment, each of the imaging lens units includes at least one lens.

In an embodiment, a mirror surface type of each of the lenses is a free combination of a spherical surface, an aspherical surface, a free-form surface, a Fresnel surface, and a plane.

Each of the imaging lens units is a series of lens groups that have an aberration correction function, and each lens may be made of a plastic material or a glass material. A quantity of lenses in the lens group is not restricted, and includes but is not limited to the following types: a spherical lens, an aspherical lens, a free-form lens, a Fresnel lens, a flat lens, and the like. The spherical lens is preferred.

In an embodiment, the first imaging lens unit 4 is a curved lens.

In an embodiment, the aspherical surface meets the following formula:

$$z = \frac{CY^2}{1 + \sqrt{1 - (1 + k)C^2 Y^2}} + \sum_{i=2}^{N} a_i Y^{2i}$$

in the formula, z is a rise, $Y$ is a lens center height, k is a conic coefficient, $C$ is a curvature, $a_i$ is an ith aspherical coefficient, and $N$ is a positive integer.

In an embodiment, the display image source 1 is one selected from an organic light-emitting diode (Organic Light-Emitting Diode, OLED) display, a liquid crystal on silicon (Liquid Crystal On Silicon, LCOS) display, a micro light-emitting diode (Micro Light-Emitting Diode, Micro LED) display, a digital light processing (Digital Light Processing, DLP) display, and a laser beam scanning (Laser Beam Scanning, LBS) display. The display image source 1 includes but is not limited to the foregoing components, and is preferably an OLED display.

A working principle of the apparatus is as follows: Imaging light emitted by the display image source 1 is converted by a linear polarization film into 45° linear polarization light, which then passes through the second imaging lens unit 5, and then is transmitted and reflected onto the first imaging prism unit 2. A film unit with an optical path modulation function is attached to a side, near the second imaging prism unit 3, of the first imaging prism unit 2. The 45° linear polarization light first undergoes total reflection on the first imaging prism unit 2 and arrives at the film unit, and then the film unit reflects the 45° linear polarization light. Through transmission of -45° linear polarization light, the light is reflected onto an outer side surface of the first imaging lens unit 4. A transflective film is disposed on the first imaging lens unit 4 to reflect the light back to the first imaging prism unit 2. In this case, an angle of the linear polarization light is changed to -45°, and the linear polarization light may be sequentially transmitted through the film unit and the second imaging prism unit 3 to finally arrive at a human eye 6 (eye) for imaging, as shown in FIG. 1. FIG. 2 is a schematic diagram of an optical path direction and diopter adjustment (synchronous movement of a display image source 1 and a second imaging lens unit 5).

Detailed descriptions are provided below by using specific embodiments. In the following tables, OBJ represents an object surface, IMG represents an image surface, Stop represents a diaphragm, and Eye relief represents an exit pupil distance. Among surface serial numbers, S2 and S3 both represent mirror surfaces, near the human eye 6, on the second imaging prism unit 3; S4, S5, S12, and S13 all represent mirror surfaces, near the second imaging prism unit 3, on the first imaging prism unit 2; S6, S7, S11, S14, and S15 all represent mirror surfaces, near the first imaging lens unit 4, on the first imaging prism unit 2; S8 and S10 both represent mirror surfaces, near the first imaging prism unit 2, on the first imaging lens unit 4; S9 represents a mirror surface, away from the first imaging prism unit 2, on the first imaging lens unit 4; S16 and S17 both represent mirror surfaces, near the second imaging lens unit 5, on the first imaging prism unit 2; S18 and S19 both represent light-emitting surfaces of the second imaging lens unit 5; and S20 represents a light incident surface of the second imaging lens unit 5. A light-emitting side of the display image source 1 is provided with flat glass (with a surface serial number S21), and a standard surface is a spherical surface.

Embodiment 1:

In this embodiment, the apparatus includes a display image source 1, a first imaging prism unit 2, a second imaging prism unit 3, a first imaging lens unit 4, and a second imaging lens unit 5. A polarization conversion unit is disposed between the first imaging prism unit 2 and the first imaging lens unit 4, and the display image source 1 and the second imaging lens unit 5 may further move synchronously in an optical axis direction to implement diopter adjustment.

Thicknesses of a linear polarization film, a film unit, and the polarization conversion unit are respectively 120 nm, 200 nm, and 60 nm. A thickness of a transflective film is 100 nm, a polarizer is disposed on a side, near a human eye, of the second imaging prism unit 3, and a thickness of the polarizer is 120 nm. In this embodiment, a thickness of a film is preferably an intermediate value, which well balances imaging quality and reliability.

**Table 1 Optical parameters at positions with a diopter 0D in Embodiment 1**

| Surface serial number | Surface type | Radius of curvature (mm) | Thickness (spacing) (mm) | Name | Tilt |
|---|---|---|---|---|---|
| OBJ | Standard surface | Infinity | -2500 | Virtual image distance | |
| Stop | Standard surface | Infinity | 15 | Eye relief | |
| S2 | Cross section | | 0 | -- | 0° |
| S3 | Standard surface | Infinity | 4 | Second imaging prism unit 3 | |
| S4 | Cross section | | 0 | -- | -15° |
| S5 | Standard surface | Infinity | 2.5 | First imaging prism unit 2 | |
| S6 | Cross section | | 0 | | 22° |
| S7 | Standard surface | Infinity | 0.1 | | |
| S8 | Standard surface | Infinity | 2 | First imaging lens unit 4 | |
| S9 | Standard surface | -45.2 | -2 | First imaging lens unit 4 | |
| S10 | Standard surface | Infinity | -0.1 | | |
| S11 | Standard surface | Infinity | 0 | First imaging prism unit 2 | |
| S12 | Cross section | | -2.5 | | -22° |
| S13 | Standard surface | Infinity | 2.5 | First imaging prism unit 2 | |
| S14 | Cross section | | 0 | | 22° |
| S15 | Standard surface | Infinity | -1 | First imaging prism unit 2 | |
| S16 | Cross section | | 0 | | 45° |
| S17 | Standard surface | Infinity | -1 | | |
| S18 | Cross section | | 0 | | -3° |
| S19 | Standard surface | -45.2 | -1.5 | Second imaging lens unit 5 | |
| S20 | Standard surface | 162.5 | -1 | | |
| S21 | Standard surface | Infinity | -0.7 | Flat glass | |
| IMG | | Infinity | | Displayimage source | |

**Table 2 Optical parameters at positions with a diopter 6D in Embodiment 1**

| Surface serial number | Surface type | Radius of curvature (mm) | Thickness (spacing) (mm) | Name | Tilt |
|---|---|---|---|---|---|
| OBJ | Standard surface | Infinity | -167 | Virtual image distance | |
| Stop | Standard surface | Infinity | 15 | Eye relief | |
| S2 | Cross section | | 0 | -- | 0° |
| S3 | Standard surface | Infinity | 4 | Second imaging prism unit 3 | |
| S4 | Cross section | | 0 | -- | -15° |
| S5 | Standard surface | Infinity | 2.5 | First imaging prism unit 2 | |
| S6 | Cross section | | 0 | | 22° |
| S7 | Standard surface | Infinity | 0.1 | | |

(continued)

| Surface serial number | Surface type | Radius of curvature (mm) | Thickness (spacing) (mm) | Name | Tilt |
|---|---|---|---|---|---|
| S8 | Standard surface | Infinity | 2 | First imaging lens unit 4 | |
| S9 | Standard surface | -45.2 | -2 | First imaging lens unit 4 | |
| S10 | Standard surface | Infinity | -0.1 | | |
| S11 | Standard surface | Infinity | 0 | First imaging prism unit 2 | |
| S12 | Cross section | | -2.5 | | -22° |
| S13 | Standard surface | Infinity | 2.5 | First imaging prism unit 2 | |
| S14 | Cross section | | 0 | | 22° |
| S15 | Standard surface | Infinity | -1 | First imaging prism unit 2 | |
| S16 | Cross section | | 0 | | 45° |
| S17 | Standard surface | Infinity | -0.1 | | |
| S18 | Cross section | | 0 | | -3° |
| S19 | Standard surface | -45.2 | -1.5 | Second imaging lens unit 5 | |
| S20 | Standard surface | 162.5 | -0.1 | | |
| S21 | Standard surface | Infinity | -0.7 | Flat glass | |
| IMG | | Infinity | | Display image source | |

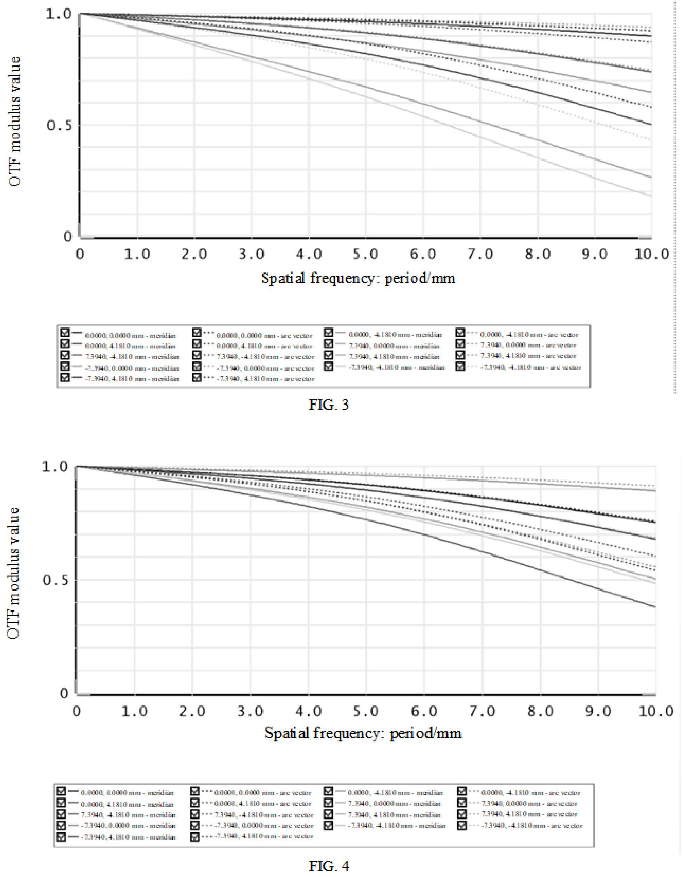

According to the optical parameters in Table 1 and Table 2, in this embodiment, a field of view FOV of a lightweight head-mounted display apparatus with a large field of view may reach 60° and a thickness may reach 9.4 mm FIG. 3 and FIG. 4 are graphs of corresponding modulation transfer function (Modulation Transfer Function, MTF) curves in a case of adjustment at a diopter 0D and a diopter 6D, respectively. In the figures, the MTF is greater than 0.1 at 101p/mm, because the apparatus belongs to a visual optical system. With reference to angular resolution of the human eye, the MTF indicator can ensure that the human eye receives a quite clear and sharp picture, thereby effectively ensuring wearing experience.

Embodiment 2:

In this embodiment, the apparatus includes a displayimage source 1, a first imaging prism unit 2, a second imaging prism unit 3, a first imaging lens unit 4, and a second imaging lens unit 5. A polarization conversion unit is disposed between the first imaging prism unit 2 and the first imaging lens unit 4, and the display image source 1 and the second imaging lens unit 5 may further move synchronously in an optical axis direction to implement diopter adjustment. Thicknesses of a linear polarization film, a film unit, and the polarization conversion unit are respectively 60 nm, 90 nm, and 30 nm. A thickness of a transflective film is 50 nm, a polarizer is disposed on a side, near a human eye, of the second imaging prism unit 3, and a thickness of the polarizer is 60nm. In this embodiment, the thickness of the film employs a thinnest combination manner, and is applicable to an optical system that has an extremely high requirement for thinning, which poses a great challenge to process difficulty. In addition, raw material costs for thinning the linear polarization film, the film unit, and the polarization conversion unit are relatively high, though an imaging effect is similar to that in Embodiment 1. A smallest thickness of an evaporated transflective film is 50 nm. Otherwise, there is a risk of uneven film plating, which affects the imaging effect.

**Table 3 Optical parameters at positions with a diopter 0D in Embodiment 2**

| Surface serial number | Surface type | Radius of curvature (mm) | Thickness (spacing) (mm) | Name | Tilt |
|---|---|---|---|---|---|
| OBJ | Standard surface | Infinity | -2500 | Virtual image distance | |
| Stop | Standard surface | Infinity | 15 | Eye relief | |
| S2 | Cross section | | 0 | -- | 0° |
| S3 | Standard surface | Infinity | 3.8 | Second imaging prism unit 3 | |

(continued)

| Surface serial number | Surface type | Radius of curvature (mm) | Thickness (spacing) (mm) | Name | Tilt |
|---|---|---|---|---|---|
| S4 | Cross section | | 0 | -- | -15° |
| S5 | Standard surface | Infinity | 2.6 | First imaging prism unit 2 | |
| S6 | Cross section | | 0 | | 22° |
| S7 | Standard surface | Infinity | 02 | | |
| S8 | Standard surface | Infinity | 2 | First imaging lens unit 4 | |
| S9 | Standard surface | -443 | -2 | First imaging lens unit 4 | |
| S10 | Standard surface | Infinity | -0.1 | | |
| S11 | Standard surface | Infinity | 0 | First imaging prism unit 2 | |
| S12 | Cross section | | -2.5 | | -22° |
| S13 | Standard surface | Infinity | 2.5 | First imaging prism unit 2 | |
| S14 | Cross section | | 0 | | 22° |
| S15 | Standard surface | Infinity | -1 | First imaging prism unit 2 | |
| S16 | Cross section | | 0 | | 45° |
| S17 | Standard surface | Infinity | -1 | | |
| S18 | Cross section | | 0 | | -3° |
| S19 | Standard surface | -452 | -1.5 | Second imaging lens unit 5 | |
| S20 | Standard surface | 162.5 | -1 | | |
| S21 | Standard surface | Infinity | -0.7 | Flat glass | |
| IMG | | Infinity | | Display image source | |

**Table 4 Optical parameters at positions with a diopter 6D in Embodiment 2**

| Surface serial number | Surface type | Radius of curvature (mm) | Thickness (spacing) (mm) | Name | Tilt |
|---|---|---|---|---|---|
| OBJ | Standard surface | Infinity | -167 | Virtual image distance | |
| Stop | Standard surface | Infinity | 15 | Eye relief | |
| S2 | Cross section | | 0 | -- | 0° |
| S3 | Standard surface | Infinity | 3.8 | Second imaging prism unit 3 | |
| S4 | Cross section | | 0 | -- | -15° |
| S5 | Standard surface | Infinity | 2.6 | First imaging prism unit 2 | |
| S6 | Cross section | | 0 | | 22° |
| S7 | Standard surface | Infinity | 02 | | |
| S8 | Standard surface | Infinity | 2 | First imaging lens unit 4 | |
| S9 | Standard surface | -44.3 | -2 | First imaging lens unit 4 | |
| S10 | Standard surface | Infinity | -0.1 | | |
| S11 | Standard surface | Infinity | 0 | First imaging prism unit 2 | |
| S12 | Cross section | | -2.5 | | -22° |
| S13 | Standard surface | Infinity | 2.5 | First imaging prism unit 2 | |
| S14 | Cross section | | 0 | | 22° |
| S15 | Standard surface | Infinity | -1 | First imaging prism unit 2 | |

(continued)

| Surface serial number | Surface type | Radius of curvature (mm) | Thickness (spacing) (mm) | Name | Tilt |
|---|---|---|---|---|---|
| S16 | Cross section | | 0 | | 45° |
| S17 | Standard surface | Infinity | -0.1 | | |
| S18 | Cross section | | 0 | | -3° |
| S19 | Standard surface | -45.2 | -1.5 | Second imaging lens unit 5 | |
| S20 | Standard surface | 162.5 | -0.1 | | |
| S21 | Standard surface | Infinity | -0.7 | Flat glass | |
| IMG | | Infinity | | Displayimage source | |

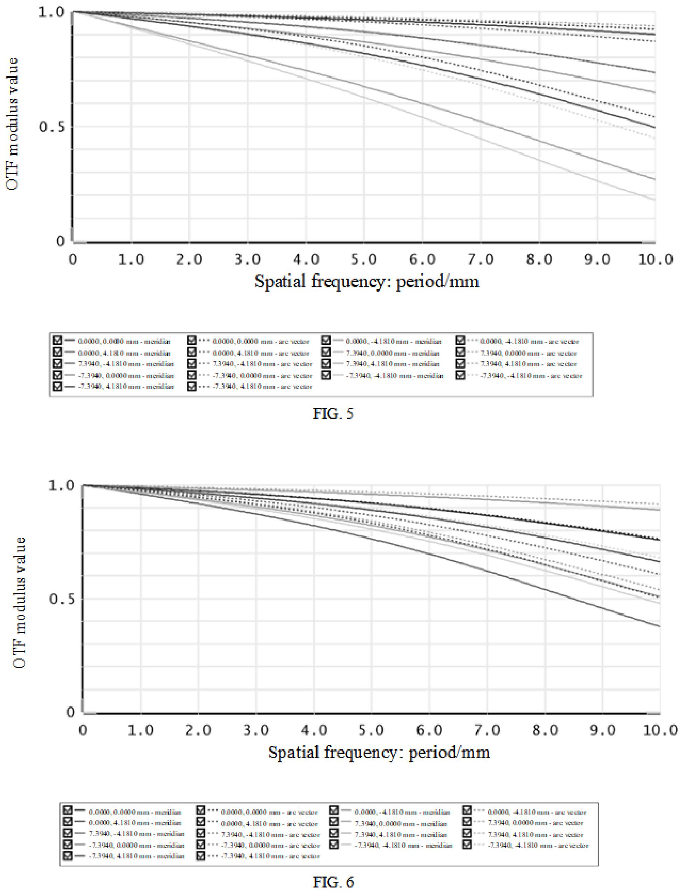

According to the optical parameters in Table 3 and Table 4, in this embodiment, a field of view FOV of a lightweight head-mounted display apparatus with a large field of view may reach 60° and a thickness may reach 9.4 mm FIG. 5 and FIG. 6 are graphs of corresponding MTF curves in a case of adjustment at a diopter 0D and a diopter 6D, respectively. In the figures, the MTF is greater than 0.1 at 10lp/mm, because the apparatus belongs to a visual optical system. With reference to angular resolution of the human eye, the MTF indicator can ensure that the human eye receives a quite clear and sharp picture, thereby effectively ensuring wearing experience.

Embodiment 3 :

In this embodiment, the apparatus includes a displayimage source 1, a first imaging prism unit 2, a second imaging prism unit 3, a first imaging lens unit 4, and a second imaging lens unit 5. A polarization conversion unit is disposed between the first imaging prism unit 2 and the first imaging lens unit 4, and the display image source 1 and the second imaging lens unit 5 may further move synchronously in an optical axis direction to implement diopter adjustment. Thicknesses of a linear polarization film, a film unit, and the polarization conversion unit are respectively 250 nm, 280 nm, and 100 nm. A thickness of a transflective film is 300 nm, a polarizer is disposed on a side, near a human eye, of the second imaging prism unit 3, and a thickness of the polarizer is 250 nm. In this embodiment, a maximum value is taken for the thickness of the film, and a relatively large quantity of raw material models may be selected for the linear polarization film, the film unit, and the polarization conversion unit. However, a relatively thick film is usually launched earlier with ordinary performance. In particular, conversion efficiency of polarization light is slightly poor. An upper limit of a thickness of a transflective film is 300 nm, because there is a risk of film detachment when the thickness exceeds this value of 300 nm, which affects the imaging effect.

**Table 5 Optical parameters at positions with a diopter 0D in Embodiment 3**

| Surface serial number | Surface type | Radius of curvature (mm) | Thickness (spacing) (mm) | Name | Tilt |
|---|---|---|---|---|---|
| OBJ | Standard surface | Infinity | -2500 | Virtual image distance | |
| Stop | Standard surface | Infinity | 15 | Eye relief | |
| S2 | Cross section | | 0 | -- | 0° |
| S3 | Standard surface | Infinity | 3.9 | Second imaging prism unit 3 | |
| S4 | Cross section | | 0 | -- | -15° |
| S5 | Standard surface | Infinity | 2.6 | First imaging prism unit 2 | |
| S6 | Cross section | | 0 | | 22° |
| S7 | Standard surface | Infinity | 0.1 | | |
| S8 | Standard surface | Infinity | 2 | First imaging lens unit 4 | |
| S9 | Standard surface | -45.2 | -2 | First imaging lens unit 4 | |
| S10 | Standard surface | Infinity | -0.1 | | |
| S11 | Standard surface | Infinity | 0 | First imaging prism unit 2 | |

(continued)

| Surface serial number | Surface type | Radius of curvature (mm) | Thickness (spacing) (mm) | Name | Tilt |
|---|---|---|---|---|---|
| S12 | Cross section | | -2.4 | | -22° |
| S13 | Standard surface | Infinity | 2.4 | First imaging prism unit 2 | |
| S14 | Cross section | | 0 | | 22° |
| S15 | Standard surface | Infinity | -1.1 | First imaging prism unit 2 | |
| S16 | Cross section | | 0 | | 45° |
| S17 | Standard surface | Infinity | -1 | | |
| S18 | Cross section | | 0 | | -3° |
| S19 | Standard surface | -45.2 | -1.5 | Second imaging lens unit 5 | |
| S20 | Standard surface | 162.5 | -1 | | |
| S21 | Standard surface | Infinity | -0.7 | Flat glass | |
| IMG | | Infinity | | Displayimage source | |

**Table 6 Optical parameters at positions with a diopter 6D in Embodiment 3**

| Surface serial number | Surface type | Radius of curvature (mm) | Thickness (spacing) (mm) | Name | Tilt |
|---|---|---|---|---|---|
| OBJ | Standard surface | Infinity | -167 | Virtual image distance | |
| Stop | Standard surface | Infinity | 15 | Eye relief | |
| S2 | Cross section | | 0 | -- | 0° |
| S3 | Standard surface | Infinity | 3.9 | Second imaging prism unit 3 | |
| S4 | Cross section | | 0 | -- | -15° |
| S5 | Standard surface | Infinity | 2.6 | First imaging prism unit 2 | |
| S6 | Cross section | | 0 | | 22° |
| S7 | Standard surface | Infinity | 0.1 | | |
| S8 | Standard surface | Infinity | 2 | First imaging lens unit 4 | |
| S9 | Standard surface | -45.2 | -2 | First imaging lens unit 4 | |
| S10 | Standard surface | Infinity | -0.1 | | |
| S11 | Standard surface | Infinity | 0 | First imaging prism unit 2 | |
| S12 | Cross section | | -2.4 | | -22° |
| S13 | Standard surface | Infinity | 2.4 | First imaging prism unit 2 | |
| S14 | Cross section | | 0 | | 22° |
| S15 | Standard surface | Infinity | -1.1 | First imaging prism unit 2 | |
| S16 | Cross section | | 0 | | 45° |
| S17 | Standard surface | Infinity | -0.1 | | |
| S18 | Cross section | | 0 | | -3° |
| S19 | Standard surface | -45.2 | -1.5 | Second imaging 1 ens unit 5 | |
| S20 | Standard surface | 162.5 | -0.1 | | |
| S21 | Standard surface | Infinity | -0.7 | Flat glass | |
| IMG | | Infinity | | Displayimage source | |

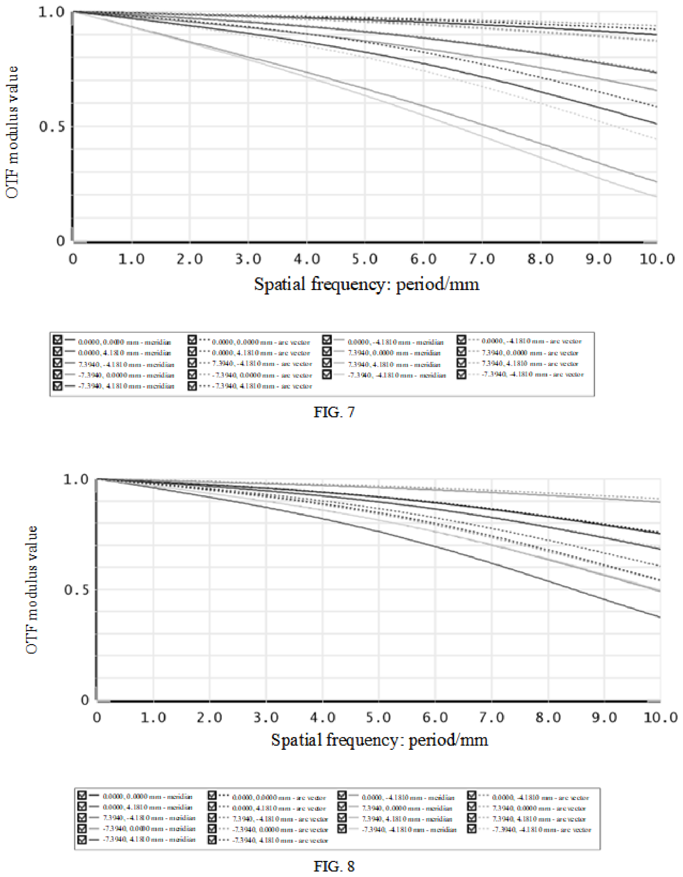

According to the optical parameters in Table 5 and Table 6, in this embodiment, a field of view FOV of a lightweight head-mounted display apparatus with a large field of view may reach 60° and a thickness may reach 9.4 mm. FIG. 7 and FIG. 8 are graphs of corresponding MTF curves in a case of adjustment at a diopter 0D and a diopter 6D, respectively. In the figures, the MTF is greater than 0.1 at 10lp/mm, because the apparatus belongs to a visual optical system. With reference to angular resolution of the human eye, the MTF indicator can ensure that the human eye receives a quite clear and sharp picture, thereby effectively ensuring wearing experience.

Embodiment 4:

In this embodiment, the apparatus includes a display image source 1, a first imaging prism unit 2, a second imaging prism unit 3, a first imaging lens unit 4, and a second imaging lens unit 5. A polarization conversion unit is disposed between the first imaging prism unit 2 and the first imaging lens unit 4, and the display image source 1 and the second imaging lens unit 5 may further move synchronously in an optical axis direction to implement diopter adjustment. Thicknesses of a linear polarization film, a film unit, and the polarization conversion unit are respectively 100 nm, 180 nm, and 80 nm. A thickness of a transflective film is 100 nm, a polarizer is disposed on a side, near a human eye, of the second imaging prism unit 3, and a thickness of the polarizer is 100 nm. In this embodiment, the thickness of the film is preferably the foregoing value, so that a main surface is compatible with a small FOV(that is, less than 60°).

**Table 7 Optical parameters at positions with a diopter 0D in Embodiment 4**

| Surface serial number | Surface type | Radius of curvature (mm) | Thickness (spacing) (mm) | Name | Tilt |
|---|---|---|---|---|---|
| OBJ | Standard surface | Infinity | -2500 | Virtual image distance | |
| Stop | Standard surface | Infinity | 15 | Eye relief | |
| S2 | Cross section | | 0 | -- | 0° |
| S3 | Standard surface | Infinity | 4 | Second imaging prism unit 3 | |
| S4 | Cross section | | 0 | -- | -15° |
| S5 | Standard surface | Infinity | 2.5 | First imaging prism unit 2 | |
| S6 | Cross section | | 0 | | 22° |
| S7 | Standard surface | Infinity | 0.1 | | |
| S8 | Standard surface | Infinity | 2.1 | First imaging lens unit 4 | |
| S9 | Standard surface | -43.6 | -2.1 | First imaging lens unit 4 | |
| S10 | Standard surface | Infinity | -0.1 | | |
| S11 | Standard surface | Infinity | 0 | First imaging prism unit 2 | |
| S12 | Cross section | | -2.4 | | -22° |
| S13 | Standard surface | Infinity | 2.4 | First imaging prism unit 2 | |
| S14 | Cross section | | 0 | | 22° |
| S15 | Standard surface | Infinity | -1 | First imaging prism unit 2 | |
| S16 | Cross section | | 0 | | 45° |
| S17 | Standard surface | Infinity | -1 | | |
| S18 | Cross section | | 0 | | -3° |
| S19 | Standard surface | -45.2 | -1.5 | Second imaging lens unit 5 | |
| S20 | Standard surface | 162.5 | -1 | | |
| S21 | Standard surface | Infinity | -0.7 | Flat glass | |
| IMG | | Infinity | | Displayimage source | |

**Table 8 Optical parameters at positions with a diopter 6D in Embodiment 4**

| Surface serial number | Surface type | Radius of curvature (mm) | Thickness (spacing) (mm) | Name | Tilt |
|---|---|---|---|---|---|
| OBJ | Standard surface | Infinity | -167 | Virtual image distance | |
| Stop | Standard surface | Infinity | 15 | Eye relief | |
| S2 | Cross section | | 0 | -- | 0° |
| S3 | Standard surface | Infinity | 4 | Second imaging prism unit 3 | |
| S4 | Cross section | | 0 | -- | -15° |
| S5 | Standard surface | Infinity | 2.5 | First imaging prism unit 2 | |
| S6 | Cross section | | 0 | | 22° |
| S7 | Standard surface | Infinity | 0.1 | | |
| S8 | Standard surface | Infinity | 2.1 | First imaging lens unit 4 | |
| S9 | Standard surface | -43.6 | -2.1 | First imaging lens unit 4 | |
| S10 | Standard surface | Infinity | -0.1 | | |
| S11 | Standard surface | Infinity | 0 | First imaging pri sm unit 2 | |
| S12 | Cross section | | -2.4 | | -22° |
| S13 | Standard surface | Infinity | 2.4 | First imaging prism unit 2 | |
| S14 | Cross section | | 0 | | 22° |
| S15 | Standard surface | Infinity | -1 | First imaging prism unit 2 | |
| S16 | Cross section | | 0 | | 45° |
| S17 | Standard surface | Infinity | -1 | | |
| S18 | Cross section | | 0 | | -3° |
| S19 | Standard surface | -45.2 | -1.5 | Second imaging lens unit 5 | |
| S20 | Standard surface | 162.5 | -1 | | |
| S21 | Standard surface | Infinity | -0.7 | Flat glass | |
| IMG | | Infinity | | Display image source | |

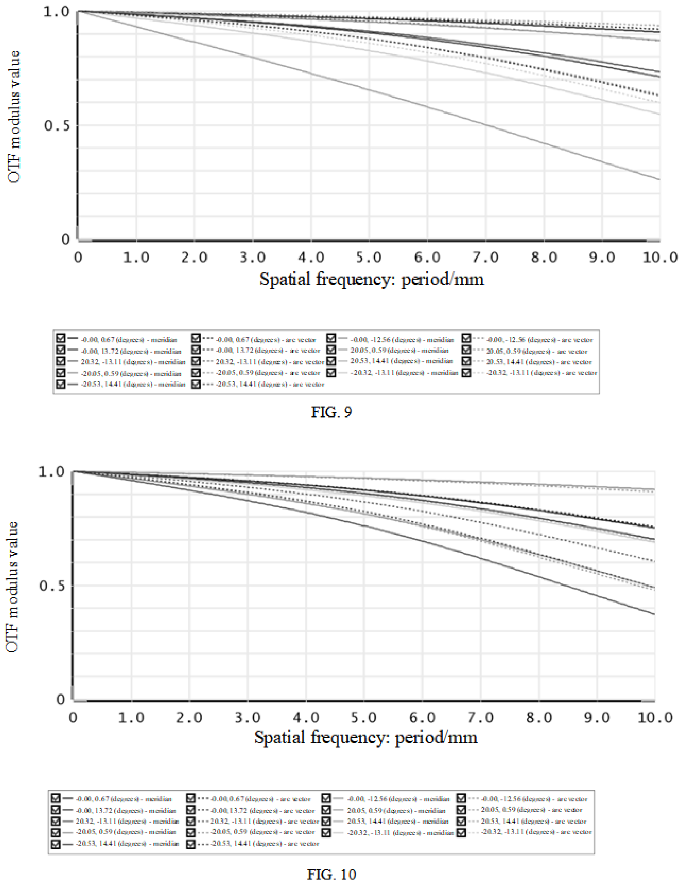

According to the optical parameters in Table 7 and Table 8, in this embodiment, a field of view FOV of a lightweight head-mounted display apparatus with a large field of view may reach 57° and a thickness may reach 9.4 mm. FIG. 9 and FIG. 10 are graphs of corresponding MTF curves in a case of adjustment at a diopter 0D and a diopter 6D, respectively. In the figures, the MTF is greater than 0.1 at 10lp/mm, because the apparatus belongs to a visual optical system. With reference to angular resolution of the human eye, the MTF indicator can ensure that the human eye receives a quite clear and sharp picture, thereby effectively ensuring wearing experience.

Embodiment 5:

In this embodiment, the apparatus includes a display image source 1, a first imaging prism unit 2, a second imaging prism unit 3, a first imaging lens unit 4, and a second imaging lens unit 5. A polarization conversion unit is disposed between the first imaging prism unit 2 and the first imaging lens unit 4, and the display image source 1 and the second imaging lens unit 5 may further move synchronously in an optical axis direction to implement diopter adjustment. Thicknesses of a linear polarization film, a film unit, and the polarization conversion unit are respectively 115 nm, 195 nm, and 60 nm. A thickness of a transflective film is 100 nm, a polarizer is disposed on a side, near a human eye, of the second imaging prism unit 3, and a thickness of the polarizer is 115 nm. In this embodiment, the thickness of the film is preferably the foregoing value, so that a main surface is compatible with a large FOV (that is, 60° or above).

**Table 9 Optical parameters at positions with a diopter 0D in Embodiment 5**

| Surface serial number | Surface type | Radius of curvature (mm) | Thickness (spacing) (mm) | Name | Tilt |
|---|---|---|---|---|---|
| OBJ | Standard surface | Infinity | -2500 | Virtual image distance | |
| Stop | Standard surface | Infinity | 15 | Eye relief | |
| S2 | Cross section | | 0 | -- | 0⁰ |
| S3 | Standard surface | Infinity | 4 | Second imaging prism unit 3 | |
| S4 | Cross section | | 0 | -- | -15° |
| S5 | Standard surface | Infinity | 22 | First imaging prism unit 2 | |
| S6 | Cross section | | 0 | | 22° |
| S7 | Standard surface | Infinity | 0.1 | | |
| S8 | Standard surface | Infinity | 23 | First imaging lens unit 4 | |
| S9 | Standard surface | -46.7 | -23 | First imaging lens unit 4 | |
| S10 | Standard surface | Infinity | -0.1 | | |
| S11 | Standard surface | Infinity | 0 | First imaging prism unit 2 | |
| S12 | Cross section | | -2.4 | | -22° |
| S13 | Standard surface | Infinity | 2.4 | First imaging prism unit 2 | |
| S14 | Cross section | | 0 | | 22° |
| S15 | Standard surface | Infinity | -1.1 | First imaging prism unit 2 | |
| S16 | Cross section | | 0 | | 45° |
| S17 | Standard surface | Infinity | -1 | | |
| S18 | Cross section | | 0 | | -3° |
| S19 | Standard surface | -45.2 | -1.5 | Second imaging lens unit 5 | |
| S20 | Standard surface | 162.5 | -1 | | |
| S21 | Standard surface | Infinity | -0.7 | Flat glass | |
| IMG | | Infinity | | Displayimage source | |

**Table 10 Optical parameters at positions with a diopter 6D in Embodiment 5**

| Surface serial number | Surface type | Radius of curvature (mm) | Thickness (spacing) (mm) | Name | Tilt |
|---|---|---|---|---|---|
| OBJ | Standard surface | Infinity | -167 | Virtual image distance | |
| Stop | Standard surface | Infinity | 15 | Eyerelief | |
| S2 | Cross section | | 0 | -- | 0° |
| S3 | Standard surface | Infinity | 4 | Second imaging prism unit 3 | |
| S4 | Cross section | | 0 | -- | -15° |
| S5 | Standard surface | Infinity | 22 | First imaging prism unit 2 | |
| S6 | Cross section | | 0 | | 22° |
| S7 | Standard surface | Infinity | 0.1 | | |
| S8 | Standard surface | Infinity | 23 | First imaging lens unit 4 | |
| S9 | Standard surface | -46.7 | -23 | First imaging lens unit 4 | |
| S10 | Standard surface | Infinity | -0.1 | | |
| S11 | Standard surface | Infinity | 0 | First imaging prism unit 2 | |

(continued)

| Surface serial number | Surface type | Radius of curvature (mm) | Thickness (spacing) (mm) | Name | Tilt |
|---|---|---|---|---|---|
| S12 | Cross section | | -2.4 | | -22° |
| S13 | Standard surface | Infinity | 2.4 | First imaging prism unit 2 | |
| S14 | Cross section | | 0 | | 22° |
| S15 | Standard surface | Infinity | -1.1 | First imaging prism unit 2 | |
| S16 | Cross section | | 0 | | 45° |
| S17 | Standard surface | Infinity | -0.1 | | |
| S18 | Cross section | | 0 | | -3° |
| S19 | Standard surface | -45.2 | -1.5 | Second imaging lens unit 5 | |
| S20 | Standard surface | 162.5 | -0.1 | | |
| S21 | Standard surface | Infinity | -0.7 | Flat glass | |
| IMG | | Infinity | | Displayimage source | |

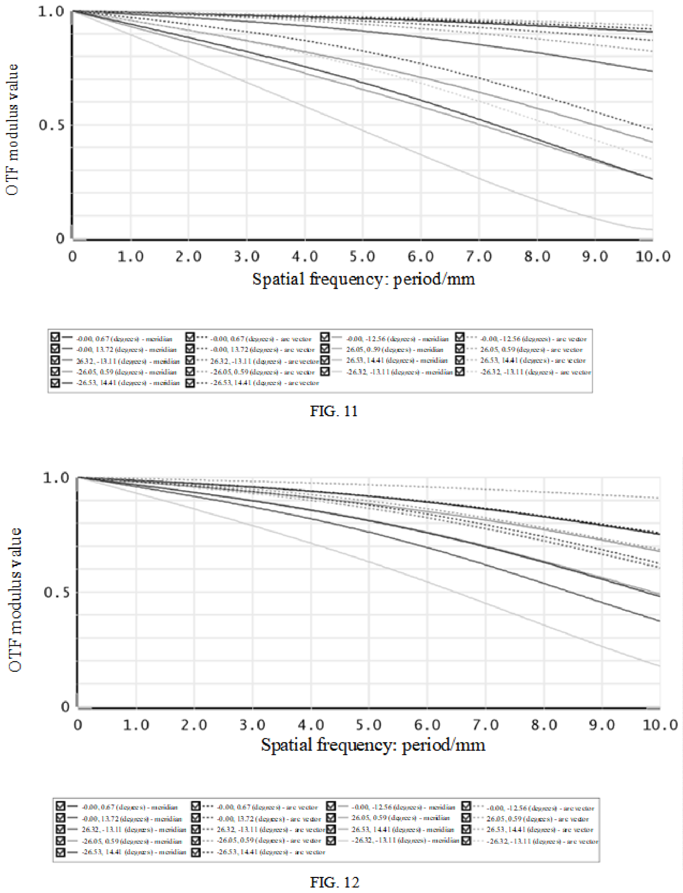

According to the optical parameters in Table 9 and Table 10, in this embodiment, a field of view FOV of a lightweight head-mounted display apparatus with a large field of view may reach 65° and a thickness may reach 9.4 mm. FIG. 11 and FIG. 12 are graphs of corresponding MTF curves in a case of adjustment at a diopter 0D and a diopter 6D, respectively. In the figures, the MTF is greater than 0.1 at 10lp/mm, because the apparatus belongs to a visual optical system. With reference to angular resolution of the human eye, the MTF indicator can ensure that the human eye receives a quite clear and sharp picture, thereby effectively ensuring wearing experience.

The technical features of the foregoing embodiments may be combined arbitrarily. For brevity of description, not all possible combinations of the technical features of the foregoing embodiments are described. However, the combinations of these technical features should be considered as falling within the scope of this specification provided that there is no contradiction between the combinations.

The foregoing embodiments are merely some specific and detailed embodiments of this application, and description of these embodiments should not be understood as a limitation on the scope of this application. It should be noted that a person of ordinary skill in the art can make any variations and improvements without departing from the concept of this application, and these variations and improvements shall fall within the protection scope of this application. Therefore, the protection scope of this application shall be subject to the appended claims.

## Claims

1.  A lightweight head-mounted display apparatus with a large field of view, wherein the lightweight head-mounted display apparatus with a large field of view comprises a display image source (1), a first imaging prism unit (2), a second imaging prism unit (3), a first imaging lens unit (4), and a polarization conversion unit, wherein

    the displayimage source (1) is provided with a linear polarization film on a light-emitting side;
    the first imaging prism unit (2) comprises a film unit and a first prism, and the film unit comprises a polarization reflection unit and is attached to a side, away from the first imaging lens unit (4), of the first prism;
    the second imaging prism unit (3) comprises a second prism and is disposed near the film unit
    the first imaging lens unit (4) is attached with a transflective film on a side away from the first imaging prism unit (2);
    the polarization conversion unit is located between the first imaging prism unit (2) and the first imaging lens unit (4), or is located between the polarization reflection unit and the first imaging prism unit (2);
    a thickness of the linear polarization film is 60 nm to 250 nm, a thickness of the film unit is 90 nm to 280 nm, a thickness of the polarization conversion unit is 30 nm to 100 nm, and a thickness of the transflective film is 50 nm to 300 nm; and
    imaging light emitted by the display image source (1) is converted by the linear polarization film into linear polarization light, and the linear polarization light enters the first imaging prism unit (2) and undergoes total reflection, and then arrives at the film unit, and is reflected by the film unit to the first imaging lens unit (4), and then is reflected back to the first imaging prism unit (2) by the first imaging lens unit (4), and is sequentially transmitted through the film unit and the second imaging prism unit (3) to arrive at a human eye (6) for imaging.

2. The lightweight head-mounted display apparatus with a large field of view according to claim 1, wherein the polarization conversion unit is a quarter-wave plate, and an included angle between a reflection axis of the film unit and a slow axis of the polarization conversion unit is 45°±1°.

3. The lightweight head-mounted display apparatus with a large field of view according to claim 1, wherein each of the prisms is a triangular prism, and the polarization reflection unit is a polarization reflection film.

4. The lightweight head-mounted display apparatus with a large field of view according to claim 1, wherein the film unit further comprises a polarization absorption unit, the polarization absorption unit is a polarization absorption film and is located between the polarization reflection unit and the second imaging prism unit (3), and an absorption axis of the polarization absorption unit is parallel to a reflection axis of the polarization reflection unit.

5. The lightweight head-mounted display apparatus with a large field of view according to claim 1, wherein the display image source (1) is able to move relative to the first imaging prism unit (2), and a moving distance is less than 5 mm.

6. The lightweight head-mounted display apparatus with a large field of view according to claim 5, wherein an included angle between a direction in which the display image source (1) is able to move relative to the first imaging prism unit (2) and an optical axis direction of the display image source (1)is 0° to 15°.

7. The lightweight head-mounted display apparatus with a large field of view according to claim 1, wherein the lightweight head-mounted display apparatus with a large field of view further comprises a second imaging lens unit (5), the second imaging lens unit (5) is located on the light-emitting side of the display image source (1), so that the linear polarization light enters the first imaging prism unit (2) through the second imaging lens unit (5).

8. The lightweight head-mounted display apparatus with a large field of view according to claim 7, wherein a focal length of the second imaging lens unit (5) is 5 mm to 50 mm.

9. The lightweight head-mounted display apparatus with a large field of view according to claim 7, wherein the display image source (1) and the second imaging lens unit (5) are able to move synchronously relative to the first imaging prism unit (2), and a moving distance is less than 4 mm.

10. The lightweight head-mounted display apparatus with a large field of view according to claim 9, wherein an included angle between a direction in which the display image source (1) and the second imaging lens unit (5) are able to move synchronously relative to the first imaging prism unit (2) and an optical axis direction of the display image source (1)is 0° to 10°.

11. The lightweight head-mounted display apparatus with a large field of view according to claim 7, wherein a polarizer is further disposed on a side, near the human eye, of the second imaging prism unit (3), and a thickness of the polarizer is 60 nm to 250 nm.

12. The lightweight head-mounted display apparatus with a large field of view according to claim 7, wherein each of the imaging lens units comprises at least one lens.

13. The lightweight head-mounted display apparatus with a large field of view according to claim 12, wherein a mirror surface type of each of the lenses is a free combination of a spherical surface, an aspherical surface, a free-form surface, a Fresnel surface, and a plane.

14. The lightweight head-mounted display apparatus with a large field of view according to claim 12, wherein the first imaging lens unit (4) is a curved lens.

15. The lightweight head-mounted display apparatus with a large field of view according to claim 13, wherein the aspherical surface meets the following formula:

$$z = \frac{CY^2}{1 + \sqrt{1 - (1+k)C^2Y^2}} + \sum_{i=2}^{N} a_i Y^{2i}$$

in the formula, $z$ is a rise, $Y$ is a lens center height, $k$ is a conic coefficient, $C$ is a curvature, $a_i$ is an ith aspherical coefficient, and $N$ is a positive integer.

16. The lightweight head-mounted display apparatus with a large field of view according to claim 1, wherein the display image source (1) is one selected from an organic light-emitting diode display, a liquid crystal on silicon display, a micro light-emitting diode display, a digital light processing display, and a laser beam scanning display.

FIG. 1

FIG. 2

FIG. 3

FIG. 4

FIG. 5

FIG. 6

FIG. 7

FIG. 8

FIG. 9

FIG. 10

FIG. 11

FIG. 12

## INTERNATIONAL SEARCH REPORT

| International application No. |
|---|
| **PCT/CN2024/097831** |

### A. CLASSIFICATION OF SUBJECT MATTER

G02B27/01(2006.01)i; G02B17/08(2006.01)i

According to International Patent Classification (IPC) or to both national classification and IPC

### B. FIELDS SEARCHED

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNABS, WPABS, WPABSC, ENTXT, ENTXTC, DWPI, VEN, CJFD: 棱镜, 第二, 第2, 偏振, 偏光, 厚度, prism+, second+, 2nd+, polariz+, thick+

### C. DOCUMENTS CONSIDERED TO BE RELEVANT

| Category* | Citation of document, with indication, where appropriate, of the relevant passages | Relevant to claim No. |
|---|---|---|
| PX | CN 116841050 A (HANGZHOU LINGBAN TECHNOLOGY CO., LTD.) 03 October 2023 (2023-10-03)<br>claims 1-16, description, paragraphs 48-133, and figures 1-12 | 1-16 |
| PX | CN 220208002 U (HANGZHOU LINGBAN TECHNOLOGY CO., LTD.) 19 December 2023 (2023-12-19)<br>claims 1-16, description, paragraphs 48-133, and figures 1-12 | 1-16 |
| X | CN 116165804 A (HANGZHOU LINGBAN TECHNOLOGY CO., LTD.) 26 May 2023 (2023-05-26)<br>description, paragraphs 19-59, and figures 1-4 | 1-16 |
| X | US 2007064310 A1 (SONY CORP.) 22 March 2007 (2007-03-22)<br>description, paragraphs 36-95, and figures 1-10 | 1-16 |
| X | KR 20010060284 A (IBM) 06 July 2001 (2001-07-06)<br>description, pages 3-11, and figures 1-14 | 1-16 |
| A | US 6005720 A (VIRTUAL VISION INC.) 21 December 1999 (1999-12-21)<br>entire document | 1-16 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 October 2024** | **09 October 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/097831**

| Patent document cited in search report | | | Publication date (day/month/year) | Patent family member(s) | | | Publication date (day/month/year) |
|---|---|---|---|---|---|---|---|
| CN | 116841050 | A | 03 October 2023 | None | | | |
| CN | 220208002 | U | 19 December 2023 | None | | | |
| CN | 116165804 | A | 26 May 2023 | None | | | |
| US | 2007064310 | A1 | 22 March 2007 | US | 7699473 | B2 | 20 April 2010 |
| | | | | WO | 2005085933 | A1 | 15 September 2005 |
| | | | | USRE | 45148 | E | 23 September 2014 |
| | | | | KR | 20060119711 | A | 24 November 2006 |
| | | | | KR | 101111742 | B1 | 15 February 2012 |
| | | | | JP | 2005250408 | A | 15 September 2005 |
| | | | | JP | 4218553 | B2 | 04 February 2009 |
| KR | 20010060284 | A | 06 July 2001 | TW | 463057 | B | 11 November 2001 |
| | | | | KR | 100397897 | B1 | 13 September 2003 |
| US | 6005720 | A | 21 December 1999 | US | 6204975 | B1 | 20 March 2001 |
| | | | | EP | 1155350 | A1 | 21 November 2001 |
| | | | | CA | 2354441 | A1 | 29 June 2000 |
| | | | | JP | 2002544533 | A | 24 December 2002 |
| | | | | JP | 4354654 | B2 | 28 October 2009 |
| | | | | US | 6101028 | A | 08 August 2000 |
| | | | | WO | 0037991 | A1 | 29 June 2000 |

Form PCT/ISA/210 (patent family annex) (July 2022)

**REFERENCES CITED IN THE DESCRIPTION**

**Patent documents cited in the description**

- CN 202310867779